Europäisches Patentamt

European Patent Office

Office européen des brevets

(19)

(11) Publication number: **0 021 153**
A1

## (12) EUROPEAN PATENT APPLICATION

(21) Application number: **80103098.2**

(22) Date of filing: **04.06.80**

(51) Int. Cl.³: **F 16 G 13/16,** F 16 L 3/00, H 02 G 11/00

(30) Priority: **08.06.79 IT 2338379**

(43) Date of publication of application: **07.01.81**
**Bulletin 81/1**

(84) Designated Contracting States: **AT BE CH DE FR GB IT LI LU NL SE**

(71) Applicant: **MAURI, Giovanni, 20, Via dei Prati, I-20052 MONZA (IT)**

(72) Inventor: **MAURI, Giovanni, 20, Via dei Prati, I-20052 MONZA (IT)**

(74) Representative: **Riccardi, Sergio, Riccardi & Co. Via Macedonio Melloni, 32, I-20129 Milano (IT)**

(54) **Cable supporting chain with monobloc elements.**

(57) The cable supporting chain consists of monobloc elements, each element comprising two side walls (1, 2), a top wall (3) and a bottom wall (4), defining a totally closed envelope, when connected to other like elements to form a chain, as well as an internal passage (5) which is totally free and may be used for the passage of cables or hoses, the side walls (1, 2) being provided with a male and female joint system for their connection with the adjacent elements, with possibility of rotation in order to define the curve described by the cable supporting chain during its translation movements.

The chain can be used for the passage of small cables and hoses in totally closed internal space defined by the mutually connected elements, avoiding interference in the operation by foreign matter.

- 1 -

"Cable supporting chain with monobloc elements"

The present invention relates to a cable supporting chain, whose link elements are made of a single monobloc piece, particularly adapted to support electrical cables and hoses of small size, during the translation movements of a machine, e.g. during the movements of machine tool members.

Cable supporting chains with monobloc elements are known, where the shape of the element is considerably complex and reproduces on a small scale the structure of chains of bigger size, more particularly having a transversal reinforcing wall in which there is a small rectangular window for the passage of cables and hoses, so that the internal volume of the element, which can be used for such passage, is very reduced and therefore the possibility of use of said known chain with monobloc elements is very limited. Moreover the upper and lower wall of the elements of said chain are not continuous, so that the cables or hoses passing inside it, may become dirty and be jammed because of the entrance of dirt in the internal passage.

In the preceding published European patent application 78200230.7 (EP 0001656 A1) of the same Applicant there is disclosed a cable supporting chain for machine parts moving in a straight line, of the kind adapted to support cables and hoses of greater size, consisting of two lateral walls connected to each other by crosspieces supporting the cables or hoses. Each lateral wall of the chain in such a publication is comprised of modular link elements of plastics material of suitable thickness and stiffness, sequentially assembled by means of a system of male and female joints provided at the ends of each element, said modular link elements thus forming two sets interconnected by said crosspieces, with the particular feature that the joints are consisting of flanges having a considerable extension in respect of the link body, and they mutually interpenetrate so as to protect the pivoting part of the link elements, and to give an ellipsoid shape to the modular elements.

It was now devised to solve the problems and remove the drawbacks of the known cable supporting chains with monobloc elements of small size, by making a monobloc element with a totally free internal passage, and therefore with a greater useful volume for the passage of cables or hoses, with upper and lower walls totally matching the adjacent elements, so as to wholly protect the cables or hoses passing inside the chain, and finally applying to the monobloc elements of small size a system of male and female joints for their connection, which is of the same general structure of the system described in said earlier publication of the same Applicant for the cable supporting chains of bigger size, but consisting of two sets of lateral elements connected by crosspieces, instead of monobloc elements as in the present invention.

The cable supporting chain according to the present invention is characterized by the fact of comprising monobloc elements, each element having two side walls, a top wall and a bottom wall, defining a wholly closed envelope, when connected to other like elements to form the chain, as well as a wholly free internal passage which may be fully used for the passage of cables or hoses, the sidewalls having a male and female joint system for their connection to the adjacent elements, with possibility of rotation in order to define the curve described by the cable supporting chain during its translation movements.

The features, objects and advantages of the cable supporting chain according to the present invention will be more apparent from the following detailed description of a preferred embo-

- 4 -

diment, given as non limiting example only, and illustrated in the accompanying drawings, in which :

Fig. 1 is a perspective view of a monobloc element forming the cable supporting chain according to the present invention;

Fig. 2 is a sectional view of one of the side walls of the monobloc element;

Fig. 3 is a top view of the monobloc element, with the pivot pin in a detached position;

Fig. 4 is a sectional top view of a set of monobloc elements connected in order to form a chain; and

Fig. 5 is a lateral view of a set of monobloc elements, connected in order to form a chain, partially sectioned to show their pivotal movement during the curve described by the chain.

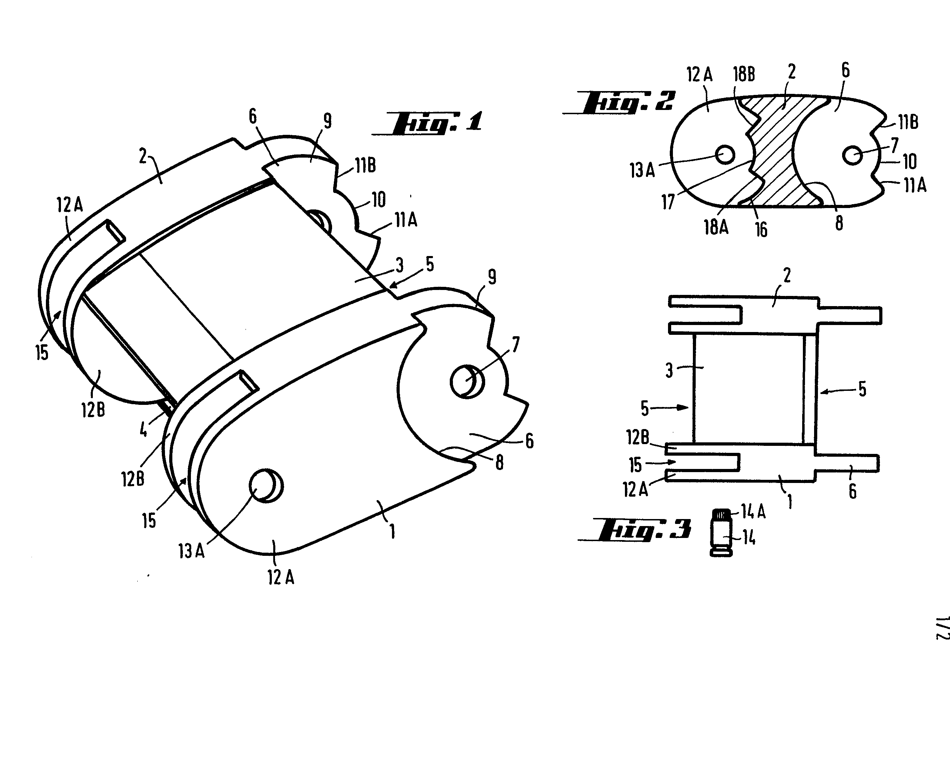

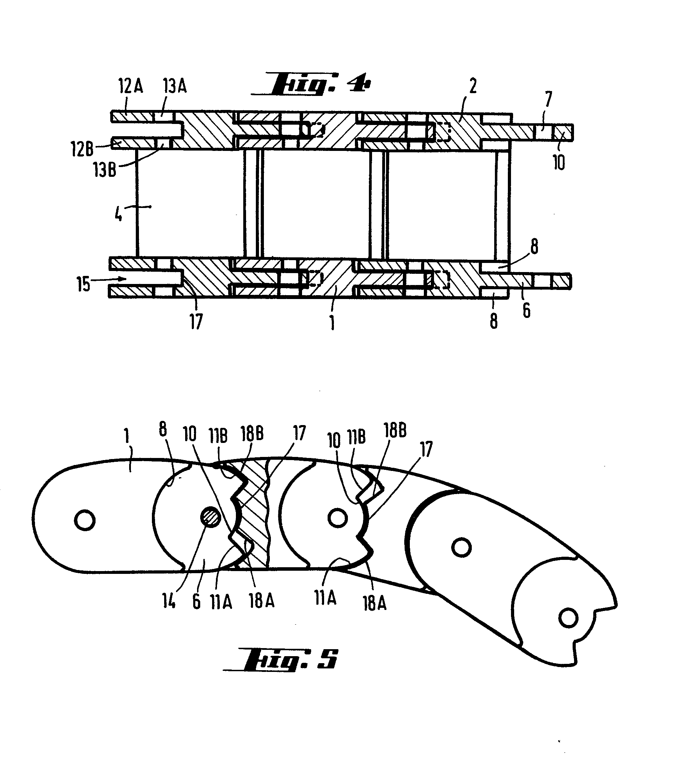

With reference now to the various figures of the accompanying drawings, each monobloc element of the cable supporting chain according to the present invention is preferably made of suitable plastic material, reinforced with glass powder.

Each monobloc element comprises two side walls 1 and 2, a top wall 3 and a bottom wall 4, all together defining a totally closed envelope, when connected to other like elements to form a chain, as well as an internal passage 5 which is totally free and may be used for the passage of cables or hoses.

- 5 -

The side walls 1 and 2 have a system of male and female joints for their connection with the adjacent elements, and more particularly they have a male joint end and a female joint end, forming the two curved terminal portions of the element ellipsoid structure.

The male joint end comprises a single flange or projecting extension 6 provided with a hole 7 for the passage of the connecting pin. The central body portion of the side wall has on both its internal and external surface facing the male joint flange, a semicircular cavity 8 for receiving the terminal curved portion of the female joint. On the terminal curved portion 9 of the male joint end or flange, there is a notch or cavity 10 defined by shoulders 11A and 11B, which may be of variable width according to the bending radius intended for the particular cable supporting chain. It is to be noted that the side walls 1 and 2 of the monobloc element have a straight bottom and a slightly bowed top, so as to match the bend intended for the cable supporting chain.

The female joint end has a form complementary to that of the male joint, and therefore comprises an outer and an inner flange or projecting extension 12A and 12B, each provided with a hole 13A or 13B for the passage of the connecting pin 14, around which the motion of relative rotation of the elements takes place. The two flanges 12A and 12B define between them a central slot 15 for inserting the male joint of the other end, with the slot bottom defined by a cavity 16 having a shape complementary to that of the notch 10 of the male joint, that is to say a concave central zone 17 on which the notch 10 rotates and two lateral cavities 18A and 18B defining the extent of rotation of the shoulders 11A and 11B and therefore the bend allowed for the monobloc element.

The modular monobloc elements are thus connected to each other by insertion of the corresponding male and female joints, secured by the connecting pin 14, which passing through the holes 7, 13A and 13B of the male joint flange 6 and of the female joint flanges 12A and 12B, respectively, is blocked by being forcedly inserted in said holes without possibility of being withdrawn, because of the feature consisting in that the hole 13A of the external flange 12A of the female joint has the same diameter of the hole 7 of the flange 6 of the male joint, while the hole 13B of the internal flange 12B of the female joint has a smaller diameter and allows only the forced insertion of the knurled tail 14A of the connecting pin 14, so as to make a forced connection between the parts.

Therefore it is clear that with the above described monobloc elements a cable supporting chain is obtained, which allows to wholly use its internal volume for the passage of cables and hoses of small size, which are totally enclosed in

- 7 -

it without being subject to external agents, and is also provided with a practical and simple system of mutual connection of the elements, being also cheap to be manufactured and easy to be assembled.

It is also to be understood that several modifications, variations, substitutions and additions of details may be made to the cable supporting chain according to the present invention without departing however from its spirit and scope as defined in the appended claims.

- 1 -

Claims.

1) Cable supporting chain consisting of monobloc elements, characterized by the fact that each monobloc element comprises two side walls (1, 2) a top wall (3) and a bottom wall (4), defining a totally closed envelope, when connected to other like elements to form a chain, as well as an internal passage (5) which is totally free and may be used for the passage of cables and hoses, the side walls (1, 2) being provided with a male and female joint system for their connection with the adjacent elements, with possibility of rotation in order to define the curve described by the cable supporting chain during its translation movements.

2) Cable supporting chain according to Claim 1, characterized by the fact that the connection system consists of a male joint at one end of the side wall, and a female joint at the opposite end thereof, said male joint having a curved projecting flange (6) to be inserted in a slot (15) formed between two parallel projecting flanges (12A, 12B) with a complementary shape and forming the female joint.

3) Cable supporting chain according to Claim 2, characterized by the fact that the relative rotation of the elements is obtained by means of a connecting pin (14) which is inserted in aligned holes (7, 13A, 13B) made in the flange (6) of the male joint and in the flanges (12A, 12B) of the female joint, respectively.

4) Cable supporting chain according to Claim 3, characterized by the fact that the hole (13B) made in the internal flange (12B) of the female joint has a reduced diameter to accomodate and force a knurled tail (14A) of reduced diameter of the connecting pin (14).

5) Cable supporting chain according to Claim 2 - 4, characterized by the fact that the extent of relative rotation of the elements is determined by a notch (10) of the terminal curved portion (9) of the male joint, rotating on a corresponding concave cavity (17) provided at the bottom of the slot (15) between the two flanges (12A, 12B) of the female joint, the two ends of the rotation movement being determined by corresponding shoulders (11A, 11B).

6) Cable supporting chain according to one or more of the proceding claims, characterized by the fact of being made of suitable plastics material, reinforced with glass powder.

0021153

1/2

Fig. 1

Fig. 2

Fig. 3

Fig. 4

Fig. 5

0021153

| | European Patent Office | EUROPEAN SEARCH REPORT | Application number EP 80 10 3098 |

## DOCUMENTS CONSIDERED TO BE RELEVANT

| Category | Citation of document with indication, where appropriate, of relevant passages | Relevant to claim |
|---|---|---|
| D | <u>EP - A - 0 001 656</u> (MAURI)<br>* The whole document * | 1,2,3,<br>5,6 |
| | <u>US - A - 3 772 875</u> (VIANO)<br>* Figures 12,13; column 3, line 48 - column 4, line 65 * | 1 |
| | <u>FR - A - 2 200 929</u> (MAURI)<br>* Figure 3; page 4, lines 23-33 * | 1,2,3 |
| | <u>US - A - 2 972 857</u> (BODMAN)<br>* Figure 2; page 1, left-hand column, lines 64-67 * | 1 |
| | <u>DE - B - 2 622 006</u> (KABELSCHLEPP GmbH)<br>* Figure 1; column 2, lines 64-68 * | 1 |
| | <u>FR - A - 1 484 355</u> (KABELSCHLEPP GmbH)<br>* Figure 2; page 5, right-hand column, lines 13-26 * | 1 |

**CLASSIFICATION OF THE APPLICATION (Int. Cl. ³)**

F 16 G 13/16
F 16 L 3/00
H 02 G 11/00

**TECHNICAL FIELDS SEARCHED (Int.Cl. ³)**

F 16 G
F 16 L
B 65 G
B 65 H
B 66 C
H 02 G

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 26-08-1980 | JAIK |

EPO Form 1503.1  06.78